# EUROPEAN PATENT APPLICATION

(11) **EP 4 752 055 A1**
(43) Date of publication of application: **03.06.2026**
(21) Application number: 25217823.1
(22) Date of filing: 21.11.2025
(51) Int. Cl.: B64C 25/60, B64C 25/58, B64F 5/60

(54) **METHOD OF MONITORING AIRCRAFT LANDING GEAR SHOCK ABSORBER**

(30) Priority: 27.11.2024 GB 202417410
(71) Applicant: Airbus Operations Limited, Bristol BS34 7PA (GB)
(72) Inventor: BILL, Andrew, Bristol BS34 7PA (GB)
(74) Representative: Mathys & Squire

(57) **Abstract**

A method of monitoring a landing gear shock absorber (4) comprises monitoring a tyre gas pressure of a landing gear tyre; at a first time, when the aircraft is stationary before a flight, recording a first ambient temperature and a first tyre gas pressure; at a second time, when the landing gear is unloaded during the flight, recording a second tyre gas pressure and a shock absorber pressure; calculating a second ambient temperature at the second time; comparing the recorded shock absorber pressure with a predetermined pressure range for the second temperature; and providing an alert if the recorded shock absorber pressure is outside the predetermined pressure range. This allows a health check of the shock absorber (4) to be performed without the need to directly measure the temperature of the shock absorber (4).

## Description

### FIELD OF THE INVENTION

This invention relates to a method of monitoring the shock absorber in an aircraft landing gear, and more particularly to a method of monitoring the pressure of the shock absorber oleo of an aircraft nose landing gear, in order to facilitate an accurate 'health check' of the shock absorber.

### BACKGROUND OF THE INVENTION

Landing gear shock absorption for an aircraft is typically provided by a shock strut using compressed gas combined with a hydraulic fluid to absorb and dissipate shock loads. This can take the form of a relatively high pressure oil-gas oleo in an interior chamber of a landing gear strut of variable volume, commonly comprising telescopic tubes. Some systems have an oleo pressure sensor which senses the pressure, conveniently the gas pressure (e.g. nitrogen gas pressure), of the oleo in the shock strut.

The relationship between the pressure and the temperature of the oleo at a given volume follows a known spring curve. A comparison of the actual oleo properties against the theoretical ideal spring curve could be performed by measuring or sensing the pressure, the temperature and the extension of the landing gear (being a height dimension, which could be used to determine the volume of the shock absorber strut). These measurements could be used to provide an accurate health assessment of the landing gear shock absorber strut, which could then enable various benefits of health monitoring. However some aircraft do not have a sensor for the height dimension, and thus the volume of the shock absorber. When an aircraft is on the ground, this dimension will be variable depending upon aircraft weight, loading etc. In addition, some aircraft do not have a temperature sensor for the strut.

It would be useful in some circumstances to be able to use the sensed pressure in the strut to determine load conditions of the aircraft; for example decreased pressure in the nose wheel strut can indicate that the aircraft loading may be likely to cause the aircraft to tip onto its tail. However this can only be done accurately if the oleo and the sensor are performing correctly; for example, the sensor is not drifting and producing erroneous data. Checking the performance of the pressure sensor can be done manually, but this is time consuming and difficult, so is generally only done infrequently. Therefore a failure of the sensor in between such manual checks would not be detected.

Monitoring the sensor pressure on the ground also might be ineffective in detecting an inaccuracy or failure since conditions may vary considerably due to weight and loading changes, as mentioned above. In addition there is a substantial friction effect tending to maintain the telescopic tubes of the shock absorber in place until a considerable change in load is applied. Therefore it is currently difficult to perform any automated oleo or system health checks using a pressure sensor alone.

The invention aims to address these issues.

### SUMMARY OF THE INVENTION

According to the invention, there is provided a method of monitoring a landing gear shock absorber, the method comprising: at a first time, when the aircraft is stationary before a flight, measuring and recording a first ambient temperature and a first tyre gas pressure; at a second time, when the landing gear is unloaded during the flight, measuring and recording a second tyre gas pressure and a shock absorber pressure; calculating a second ambient temperature at the second time from the first and second gas tyre pressures and the first ambient temperature; comparing the shock absorber pressure with a predetermined pressure range at the second temperature; and providing an alert if the shock absorber pressure is outside the predetermined pressure range.

Thus the invention utilises tyre gas pressure to provide an indication of the shock absorber temperature when the aircraft is in flight. Whilst some aircraft may have sensors that include both tyre pressure and tyre temperature, this method can be used where no tyre temperature sensor is provided and there is no direct means for measuring landing gear bay temperature. Since the shock absorber is unloaded and has a fixed volume in flight, this in combination with the sensed pressure enables the sensor to be monitored without directly sensing the temperature of the landing gear. Preferably, at the second time the landing gear is extended and locked.

Preferably, the method comprises monitoring the tyre gas pressure and determining that the tyre gas pressure has been stable over a predetermined time period, for example at least around 20-30 minutes, and possibly up to 60 minutes, at the first time, and preferably also at the second time. The method may also include monitoring the shock absorber pressure and determining the that the shock absorber pressure has been stable over the predetermined time period at the first time. This may improve the accuracy of the method.

In addition the method may include determining that the ambient temperature is stable at the first time by measuring a brake temperature of a braking system associated with the landing gear, and comparing the brake temperature with the ambient temperature. This serves as a further check that stable conditions have been reached.

The method may be carried out 'off board' at a remote monitoring location. This is convenient for example where remote monitoring systems are already in place. Thus the aircraft data, in particular tyre gas pressure data and shock absorber pressure data, may be transmitted to the monitoring location, and any alert may be sent back to the aircraft operator or other third party from the monitoring location. The alert may be in the form of a notification, for example a monitoring notification or a maintenance notification.

The predetermined pressure range may be +/- 20 percent of a predetermined ideal pressure value at the second temperature, which may be determined from a look up table or graph, although larger or smaller ranges may be used. For example, the pressure range may be up to +/- 15%, +/-20%, +/-30%, or may be up to +/- 35%. This is to take account of minor measurement or equipment inaccuracies and variations.

The method may for example be used with a nose landing gear (NLG). The landing gear may comprise one or more tyres, and the gas pressure in each of the one or more tyres may monitored. The recorded pressure values may be taken from one or both tyres, or may be an average pressure in more than one tyre. For example, the gas pressure in each of the left NLG and right NLG tyres may be measured and an average value may be used as the first tyre gas pressure and/or the second tyre gas pressure. Alternatively, the method may be performed using the tyre gas pressure in each tyre, or from one tyre where there is a sensor failure in the other tyre. Where the values in each tyre vary by more than a predetermined amount, or the calculated second ambient temperature varies by more than a predetermined amount, for example a few degrees, the method may be terminated.

The shock absorber commonly comprises an oil/gas oleo, and the sensed pressure may be the gas pressure in the oleo, which may be easier to measure than the oil pressure. The temperature at the second time may be calculated by multiplying the ratio of the second pressure to the first pressure by the first temperature. The first pressure may be adjusted to take account of loading of the tyre on the ground, for example by up to 4%, depending on the weight of the aircraft.

The invention may also provide a system configured to carry out the method of any one of the preceding claims.

The method need only be performed periodically, for example every three days, allowing for days where there may be a high number of flights and tyre gas stability is not achieved.

### BRIEF DESCRIPTION OF THE DRAWINGS

In order that the invention may be more readily understood, reference will now be made by way of example to the accompanying drawings, in which:
Figure 1 is a simplified diagram of an aircraft landing gear;
Figure 2 is an example graph of tyre gas pressure for a stationary aircraft;
Figure 3 is an example graph of tyre gas pressure for an aircraft in flight;
Figure 4 is a graph showing the oleo spring curve with monitoring thresholds; and
Figure 5 is a look up table corresponding to the graph in Figure 4.

### DETAILED DESCRIPTION OF PREFERRED EMBODIMENTS

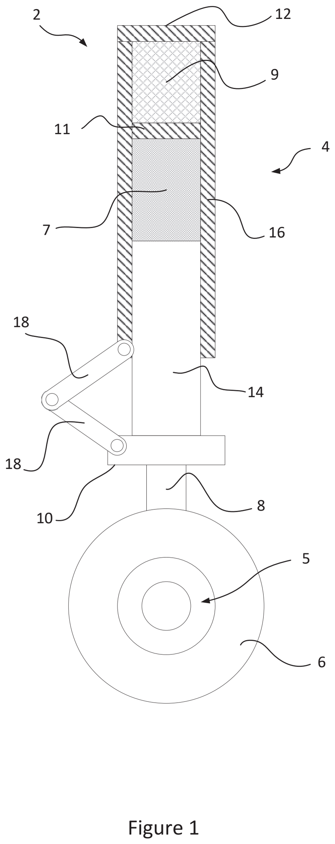

Referring to Figure 1, an aircraft landing gear, for example a nose wheel landing gear 2 comprises a shock absorber in the form of a strut 4, on which one or more wheels 5 are mounted. In this example, a nose landing gear (NLG) comprises a pair of wheels 5 having tyres 6 which are attached to a lower end 10 of the strut 4 by means of support arms 8 extending one on either side of the strut 4 (only one wheel is shown in the figure since the other wheel is behind it). The upper end 12 of the strut 4 is attached to the aircraft (not shown). The NLG normally also includes a steering mechanism (not shown).

The strut 4 comprises a pair of telescopic tubes 14, 16. The lower tube 14 is movable into and out of the upper tube 16 to vary the length of the strut 4 in order to absorb shock loads, for example upon the aircraft landing. A pair of links 18 may be pivotally mounted one to each of the tubes 14, 16.

An interior chamber of the strut 4 is commonly filled with a pressurised gas/liquid mixture, for example nitrogen gas and oil, to dampen telescopic movement of the tubes 14, 16. For example, a lower portion 7 of the chamber may be filled with oil, and an upper portion 9 may be filled with gas. The upper and lower portions 7, 9 may be separated by a plate 11.

It is important to monitor the pressure within the chamber in order to check shock absorption performance. The pressure within the chamber may be sensed by a pressure sensor (not shown), which conveniently senses the gas pressure, for example the nitrogen gas pressure, in the upper portion 9 of the chamber. However, the pressure within the chamber varies with temperature and loading of the landing gear. Often, there is no temperature sensor or height sensor associated with the strut. Therefore it is difficult to check that the system is operating correctly using a pressure sensor only, without complex and time consuming manual checks.

The landing gear 2 also commonly comprises at least one tyre gas pressure sensor (not shown) for sensing gas pressure in one or both tyres 6 of the landing gear. For example there may be a pressure sensor in each tyre, commonly two tyres, being a left NLG and right NLG tyre. The gas volume in the tyre varies only slightly depending on load, and therefore gas pressure in the tyre is relatively unaffected by load. However, if it found that NLG loading does have an effect this can be compensated for as described below.

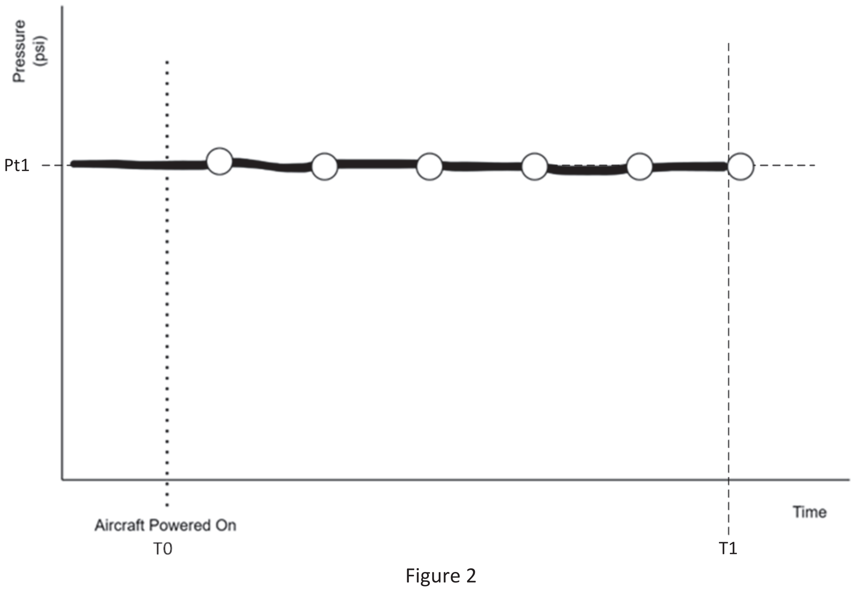

Referring now to Figure 2, after powering on the aircraft at time T0 before a flight, the tyre gas pressure may be stable. This may be checked by monitoring tyre gas pressure by measuring the tyre gas pressure periodically, for example every 10 minutes (although other periods such as every 6 minutes or between 6 and 10 minutes could be used), as represented by the points plotted on the graph of Figure 2. The tyre gas pressure is compared with previous values, and if it is the case that the pressure is stable, that is if the measured pressure has not changed or has changed by only a small amount over a predetermined time period, for example the last 30 minutes, 60 minutes, or other predetermined time period, the temperature in the landing gear can also be assumed to be stable and correspond to ambient temperature. For example, if the monitored tyre pressure has been stable, in this example at or close to a pressure Pt1 for 30-40 minutes until time T1, it may be assumed that conditions are stable. The brake temperature, which is commonly also monitored, may also be used to check that the temperature is stable. In addition, the oleo pressure may also be monitored to check for stability.

Once a stable condition is confirmed at time T1, meaning that the tyre pressures are stable, a measurement of the ambient temperature is taken. This can then be assumed to be the temperature of the gas in the tyre, giving a reference gas pressure Pt1 and temperature Tt1 in the tyre at time T1.

The aircraft then performs a flight, during which the tyre pressures may be continually monitored. The oleo pressure may also be continually monitored. Once the landing gear is extended and locked, it is determined whether the tyre pressure, and optionally also the oleo pressure, is stable. For a relatively long flight, such as expected flight times for freighter aircraft, the temperature in the nose landing gear bay is likely to have reached a stable state. For shorter flights where stability has not been reached, the method may be less accurate and so may not be performed.

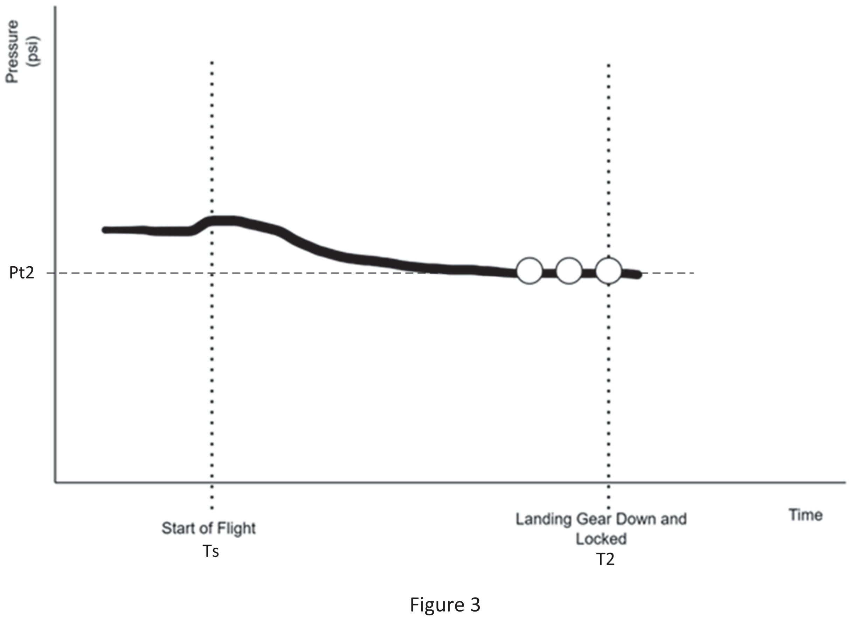

As shown in Figure 3, the tyre pressure at the start of the flight, at time Ts, likely increases for example due to friction effects on take-off roll. The pressure then likely decreases as the aircraft climbs and the ambient temperature lowers, and will stabilise over the course of the flight, likely a few hours, until it reaches a stable pressure Pt2. For shorter flights, as can be seen from Figure 3, there may be insufficient time for the temperature to stabilise completely.

Towards the end of the flight, at time T2, the landing gear is extended and locked in position. The height of the shock absorber strut, and thus the volume of the oleo chamber, is fixed in this position. In the event that stable conditions have been reached as shown in Figure 3, for example with the tyre gas pressure remaining stable over a predetermined time period such as 30 minutes, the tyre gas pressure Pt2 is recorded. It is then possible to determine the gas temperature in the tyre, since the gas pressure and gas temperature have a fixed ratio, assuming no loss of pressure and no change in volume. The temperature at landing gear extension can thus be derived as the ratio of Pt2 to Pt1, multiplied by Tt1.

In more detail:
Using the gas equation: Pt1.Vt1/Tt1 = Pt2.Vt2/Tt2,
   where Vt1 and Vt2 are the tyre volume at time T1 and T2 respectively.
Therefore, assuming the tyre volume remains constant: Pt1/Tt1= Pt2/Tt2
Thus: Tt2=Pt2.Tt1/Pt1

This assumes no effect on the pressure of the tyre load on the ground. The effect on the tyre gas pressure of the aircraft load is small and therefore can often be ignored. However, for greater accuracy, account can be taken of the small change if the aircraft is heavy. For example, where there is a significant load, it would also be possible to make an estimate of the pressure change due to the reduction in pressure when the tyre is unloaded in flight compared to when loaded on the ground. For example, it could be assumed that the pressure will be reduced by about 2% for a medium weight of aircraft, and about 4% for a heavy aircraft, with no change for a light aircraft.

This temperature Tt2 can be assumed to be the same as the temperature of the oleo gas Tg2, assuming the nose landing gear oleo is at the same ambient temperature as the nose landing gear wheels and tyres. The pressure of the oleo gas Pg2 can be sensed at this time T2, and the oleo volume Vg is known and fixed, since the shock absorber has a fixed volume when the landing gear is fully extended in flight.

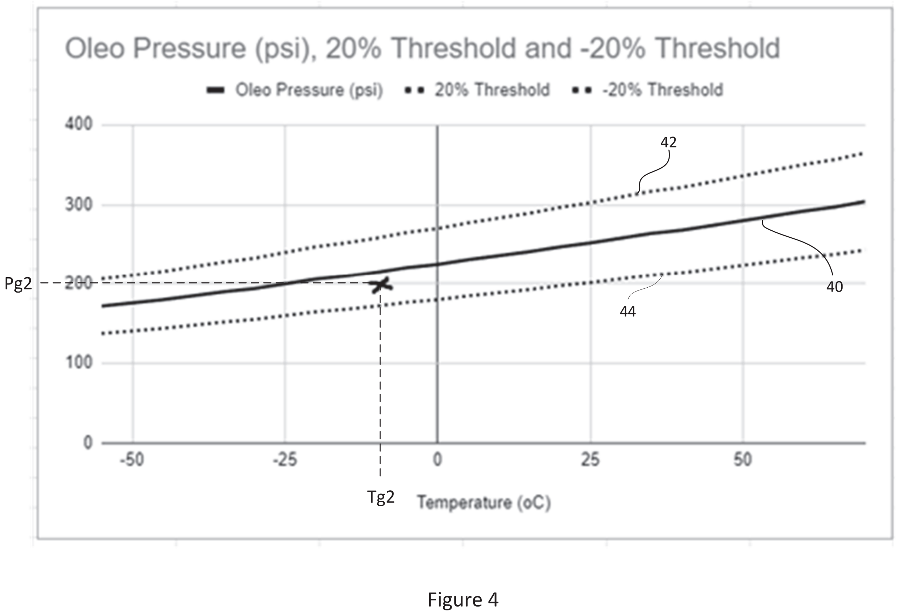

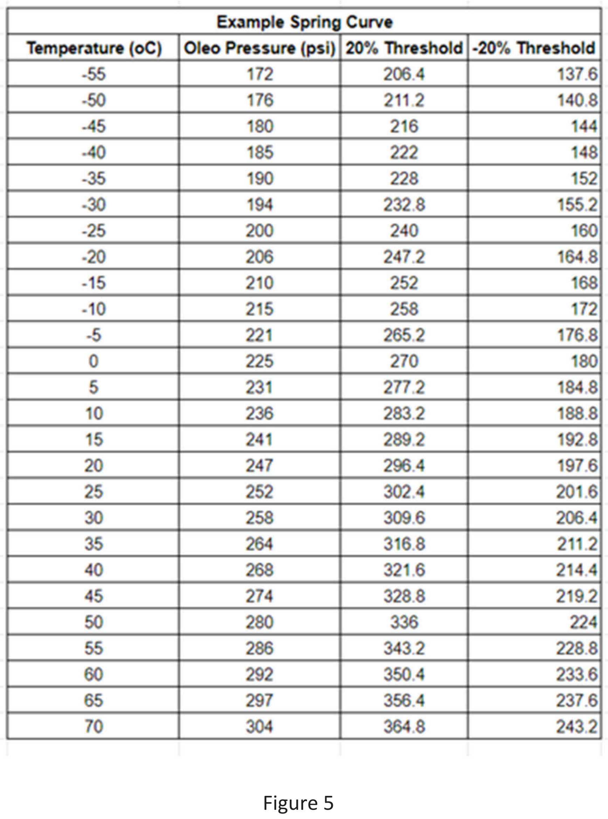

Referring now to Figures 4 and 5, the example ideal oleo spring curve is depicted as a graph of pressure (psi) against temperature (degrees C) at the fixed volume Vg as a solid line 40. This is derived from a look up table of ideal and threshold values of pressure at various temperatures shown in Figure 5.

The sensed pressure Pg2, and the derived temperature Tg2, can be compared against the ideal spring curve, shown plotted on this graph as a point 'x'. Ideally this point should lie on the ideal spring curve 40. A predetermined alert threshold may be set either side of the curve, defining a predetermined acceptable pressure range. The upper alert threshold 42 may for example be 15% above the curve 40, and the lower alert threshold 44 may for example be 15% below the curve 40. This is in order to take account of minor inaccuracies or errors such as errors of loading/unloading of the nose landing gear, system sensing accuracy, slight losses of pressure, temperature differences between the derived and actual temperature, and rigging errors caused by inaccuracies during oleo oil/gas filling and charging of the shock absorber.

If the sensed pressure lies outside of the predetermined acceptable pressure range, an alert may be generated indicating that the shock absorber system may not be operating correctly; for example the pressure sensor may not be giving accurate readings. The alert may be provided as part of an onboard monitoring system, or via an off board or remote monitoring function which may for example notify the airline that maintenance may be required. In this case further checks on the system may be performed.

The method may be performed using measured tyre gas pressure in one or both tyres, or an average pressure in the tyres. In the event of a sensor failure in one tyre, the tyre gas pressure in the other tyre may be used. In the event that the tyre gas pressures in each tyre vary by more than a predetermined amount, the method may not be performed, for example because this may provided erroneous results.

On operational days of the aircraft where there may be only relatively short flights, and consequently tyre gas stability is not achieved, the method may not be accurate and so may not be performed. However the method described above need only be performed periodically, for example once every 3 days or less frequently, for example every 10 days, and therefore this should not present a problem with most freighter aircraft schedules. In addition, if necessary, a more basic 'gross check' can be performed on the ground, in order to detect pressures outside of normal operating pressure, for example very low pressure caused by seal failure or very high pressure caused by poor maintenance.

## Claims

1. A method of monitoring an aircraft landing gear shock absorber, the method comprising:
at a first time, when the aircraft is stationary before a flight, measuring and recording a first ambient temperature and a first tyre gas pressure;
at a second time, when the landing gear is unloaded during the flight, measuring and recording a second tyre gas pressure and a shock absorber pressure;
calculating a second ambient temperature at the second time from the recorded first and second gas tyre pressures and the first ambient temperature;
comparing the shock absorber pressure with a predetermined pressure range at the second ambient temperature; and
providing an alert if the shock absorber pressure is outside the predetermined pressure range.

2. A method as claimed in claim 1, wherein at the second time the landing gear is extended and locked.

3. A method as claimed in claim 1 or 2, comprising monitoring that the tyre gas pressure and determining that the tyre gas pressure has been stable over a predetermined time period at the first time, the second time, or both.

4. A method as claimed in claim 3, comprising monitoring the shock absorber pressure and determining from the monitored pressure that the shock absorber pressure has been stable over a predetermined time period at the first time, the second time, or both.

5. A method as claimed in claim 3 or 4, comprising determining that the ambient temperature is stable at the first time by measuring a brake temperature of a braking system associated with the landing gear, and comparing the brake temperature with the measured ambient temperature.

6. A method as claimed in any of claims 3 to 5, wherein the predetermined time period is at least 20 minutes, preferably between 20 and 30 minutes, and more preferably at least 30 minutes, optionally between 30 and 60 minutes.

7. A method as claimed in any preceding claim, comprising sending data concerning the recorded gas tyre pressures and shock absorber pressure to a remote location, carrying out the method at the remote location, and sending an alert to a third party from the remote location.

8. A method as claimed in any preceding claim, in which the predetermined pressure range is at least around + or - 15%, preferably at least around 20%, optionally up to 35% of a predetermined ideal pressure value.

9. A method as claimed in any preceding claim, wherein the landing gear is a nose landing gear of an aircraft.

10. A method as claimed in any preceding claim, wherein the landing gear comprises one or more tyres, and the gas pressure in each of the one or more tyres is measured, optionally wherein the first gas tyre pressure and the second gas tyre pressure each comprise an average of the gas pressure in each tyre at the first and second times respectively.

11. A method as claimed in any preceding claim, wherein the shock absorber comprises an oil/gas oleo.

12. A method as claimed in any preceding claim, wherein the measured pressure in the shock absorber is a gas pressure.

13. A method as claimed in any preceding claim, comprising calculating the second ambient temperature by multiplying the ratio of the second tyre gas pressure to the first tyre gas pressure by the first ambient temperature.

14. A method as claimed in any preceding claim, comprising adjusting the first pressure to take account of loading of the tyre, optionally comprising adjusting the first pressure by a predetermined amount, preferably a predetermined percentage such as up to 4%, depending upon the weight of the aircraft.

15. A system configured to carry out the method of any one of the preceding claims.
